# EUROPÄISCHE PATENTSCHRIFT

(11) **EP 3 475 009 B1**
(45) Veröffentlichungstag und Bekanntmachung des Hinweises auf die Patenterteilung: **20.05.2020**
(21) Anmeldenummer: 17731522.3
(22) Anmeldetag: 14.06.2017
(51) Int. Cl.: B60B 23/00, C21D 6/00, B21D 53/30, C21D 8/02, C22C 38/58, C22C 38/38, C22C 38/04, C22C 38/28, C22C 38/26, C22C 38/14, C22C 38/12, C22C 38/06, C21D 9/34, C22C 38/02, B60B 3/00, B60B 3/04

(54) **FAHRZEUGRAD UND VERWENDUNG**
VEHICLE WHEEL AND USE THEREOF
ROUE DE VÉHICULE ET UTILISATION

(30) Priorität: 24.06.2016 DE 102016211411
(43) Veröffentlichungstag der Anmeldung: 01.05.2019
(73) Patentinhaber: ThyssenKrupp Steel Europe AG, 47166 Duisburg (DE); thyssenkrupp AG, 45143 Essen (DE)
(72) Erfinder: PIERONEK, David, 44329 Dortmund (DE); HOFMANN, Harald, 44357 Dortmund (DE); SCHWABE, Jonas, 47249 Duisburg (DE)
(74) Vertreter: ThyssenKrupp Steel Europe AG
(86) Internationale Anmeldenummer: PCT/EP2017/064526
(87) Internationale Veröffentlichungsnummer: WO 2017/220398

(56) Entgegenhaltungen:
- EP-A1- 1 573 075
- EP-A2- 0 826 787
- WO-A1-2014/125017
- DE-A1- 10 128 544
- DE-A1- 19 900 199

## Beschreibung

Die Erfindung betrifft ein Fahrzeugrad umfassend eine Felge zur Aufnahme eines Reifens und eine an die Felge angebundene Radschüssel mit einem Anbindungsbereich zur lösbaren Anbindung an einen Radträger. Ferner betrifft die Erfindung eine Verwendung des Fahrzeugrades.

Konventionell werden Fahrzeugräder aus Aluminiumwerkstoffen als Guss- oder Schmiedeteile sowie aus Stahlwerkstoffen in Blechbauweise gefertigt. Die beispielsweise aus Stahlwerkstoff in Blechbauweise gefertigten Fahrzeugräder umfassen mindestens eine Felge zur Aufnahme eines Reifens und eine an die Felge angebundene Radschüssel mit einem Anbindungsbereich zur lösbaren Anbindung an einen Radträger. Fahrzeugräder sind Sicherheitsbauteile und müssen im Betrieb hohe mechanische Wechselbeanspruchungen dauerfest aufnehmen können. Insbesondere wird eine ausreichende Festigkeit und Ermüdungsbeständigkeit bei gleichzeitig genügender Verformbarkeit gefordert. Zur Erfüllung dieser Anforderungen kommen derzeit mikrolegierte Stahllegierungen mit im Wesentlichen überwiegend ferritischem Gefüge, (Baustahllegierungen), beispielsweise für Nutzfahrzeugräder, zum Einsatz, die durch Kaltumformung in ihre Endgeometrie geformt werden. Eine Steigerung der Bauteilperformance kann durch den Einsatz von beispielsweise Mehrphasenstählen, wie beispielsweise Dualphasen-, Komplexphasen- oder Vergütungsstählen erreicht werden. Alternativ oder kumulativ bieten diese Stähle ein gewisses Leichtbaupotential, welche hohe Festigkeiten im Endzustand aufweisen können und in Bereichen Anwendung finden, in denen bestehende Werkstoffkonzepte mit beispielsweise geringer Festigkeit substituiert werden können. Durch die Substitution können bei der Bauteilauslegung mit im Wesentlichen gleichbleibender Performance die Materialdicken infolge der höheren Festigkeiten reduziert werden, welche sich somit vorteilhaft auf die Reduzierung der eingesetzten Masse auswirkt. Eine reduzierte Masse kann sich auch vorteilhaft bei rotierenden Bauteilen auswirken. Untersuchungen haben gezeigt, dass Stahlwerkstoffe mit sehr hohen Festigkeiten bei schwingender Belastung zumindest bereichsweise hohe Sensitivität gegenüber Schwachstellen, wie z. B. Fügestellen, Kanten, Kerben aufweisen und damit das vorhandene Leichtbaupotential in der Regel aufheben können.

Vor dem Hintergrund des bekannten Standes der Technik ist der Werkstoffeinsatz für Fahrzeugräder nur eingeschränkt mit Stählen höherer Festigkeit möglich. Insbesondere kann eine Blechdickenreduktion im Vergleich zu den konventionell eingesetzten Werkstoffen nicht zielführend sein, wenn der Steifigkeitsverlust bei biegedominierten Bauteilen überproportional abfällt. Der Erfindung lag somit die Aufgabe zugrunde, ein Fahrzeugrad bereitzustellen, welches im Vergleich zum bekannten Stand der Technik hinsichtlich Gewicht und/oder Rotationsbeschleunigung optimierter ausgelegt werden kann, sowie eine entsprechende Verwendung anzugeben. Patent EP1573075 A1 offenbart eine dichtereduzierte und gut formbare, feste Stahllegierung zur Herstellung von Fahrzeugrädern mit einem Siliziumgehalt von > 2,50-8,00 Gew.%.

Patent EP0826787 A2 offenbart einen Leichtbaustahl als Werkstoff für Fahrzeugteile oder Fassadenverkleidungen.

Gemäß einem ersten Aspekt der Erfindung wird die Aufgabe gemäß des erfindungsgemäßen Fahrzeugrades mit den Merkmalen des Anspruchs 1 gelöst.

Die Erfinder haben festgestellt, dass durch die Verwendung einer dichtereduzierten Stahllegierung für die Felge und/oder für die Radschüssel, das erfindungsgemäße Fahrzeugrad eine im Vergleich zu dem konventionell eingesetzten Material reduzierte Masse aufweisen kann. Kommt die dichtereduzierte Stahllegierung besonders bevorzugt in der Felge zum Einsatz, weist der äußere Bereich des Fahrzeugrades umlaufend eine geringere Dichte auf. Je weniger Masse von einer Drehachse entfernt ist, desto weniger trägt sie zum Trägheitsmoment bei, wobei der Abstand quadratisch eingeht. Das kann sich vorteilhaft auf die Massenträgheit des Fahrzeugrades auswirken. Somit können bei im Wesentlichen vergleichbarer bzw. gleichbleibender Performance geringere Massen in der Felge und/oder in der Radschüssel eingesetzt werden, welche sich vorteilhaft auf eine Reduzierung der eingesetzten Masse sowie auf eine verbesserte Rotationsbeschleunigung auswirken kann. Durch Mischbauweise von beispielsweise Aluminium und Stahl kann ebenfalls eine verbesserte Massenbilanz sowie Rotationsbeschleunigung beim Fahrzeugrad erreicht werden. Allerdings ist das in der Radfertigung von Stahlrädern konventionell eingesetzte Fügeverfahren MAG-Schweißen und Beschichtungsverfahren dann nicht anwendbar. Ebenso muss das Korrosionsverhalten sowie thermische Ausdehnungsverhalten bei einem Hybridrad berücksichtigt werden. Diese Probleme werden durch das erfindungsgemäße Rad behoben.

Erfindungsgemäß enthält die dichtereduzierte Stahllegierung folgende Legierungsbestanteile in Gew.-%:

| | |
|---|---|
| C: | bis zu 0,4 %, |
| Al: | 3,0 - 20,0 %, |
| P: | bis zu 0,1 %, |
| S: | bis zu 0,1 %, |
| N: | bis zu 0,1 %, |

sowie optional eines oder mehrere der Elemente

| | |
|---|---|
| Nb: | bis zu 0,5 %, |
| Ti: | bis zu 0,5 %, |
| Ceund/oder La: | bis zu 0,2 %, |
| Mn: | bis zu 25,0 %, |
| Si: | bis zu 2,0 %, |
| Cr: | bis zu 9,0 %, |
| Zr: | bis zu 1,0 %, |
| V: | bis zu 1,0 %, |
| W: | bis zu 1,0 %, |
| Mo: | bis zu 1,0 %, |
| Co: | bis zu 1,0 %, |
| Ni: | bis zu 2,0 %, |
| B: | bis zu 0,1 %, |
| Cu: | bis zu 3,0 %, |
| Ca: | bis zu 0,1 %, |

enthält, Rest Fe und unvermeidbare Verunreinigungen.

Über die Legierungselemente werden die gewünschten Eigenschaften in der dichtereduzierten Stahllegierung eingestellt. Aluminium ist ein Element mit einer Dichte von ca. 2,7 g/cm³ und weitet das Kristallgitter von Stahl auf. Um eine signifikante Dichtereduzierung in der Stahllegierung erzielen zu können, beträgt der Mindestgehalt mindestens 3,0 Gew.-%, insbesondere mindestens 5,0 Gew.-%, vorzugsweise mindestens 6,0 Gew.-%. Gehalte oberhalb von 20,0% führen zur Bildung von unerwünschten, spröden intermetallischen Phasen, wobei die Gehalte insbesondere auf maximal 15 Gew.-%, vorzugsweise auf maximal 12 Gew.-% beschränkt werden, um die Wirkung von Aluminium besonders effektiv nutzen zu können.

Kohlenstoff darf mit einem Gehalt von bis zu 0,4 Gew.-% anwesend sein. Um eine ausreichende Fügeeignung sicherstellen zu können, kann der Kohlenstoffgehalt insbesondere auf maximal 0,3 Gew.-% beschränkt sein. Vorzugsweise kann der Kohlenstoffgehalt auf maximal 0,1 Gew.-% beschränkt sein, um Ausscheidungen in Form von unerwünschten, spröden Karbiden zu vermindern und damit eine nachteilige Beeinträchtigung auf die Umformeignung im Wesentlichen zu reduzieren.

Phosphat darf mit einem Gehalt von bis zu 0,1 Gew.-% anwesend sein. Um Seigerungen, welche sich negativ auf die mechanischen Eigenschaften auswirken können, in der Stahllegierung im Wesentlichen zu reduzieren, kann der Gehalt auf maximal 0,01 Gew.-% beschränkt sein.

Stickstoff und Schwefel beeinflussen negativ die Eigenschaften der Stahllegierung, insbesondere durch Bildung von Sulfiden und Nitriden und sind daher auf Gehalte von maximal 0,1 Gew.-% beschränkt. Insbesondere können die Gehalte von Schwefel auf maximal 0,01 % und Stickstoff auf maximal 0,02 % beschränkt sein, wodurch die Eignung auf Schwingbeanspruchung der Stahllegierung im Wesentlichen nicht negativ beeinflusst wird.

Niob und/oder Titan binden insbesondere Kohlenstoff ab und können jeweils auf einen Gehalt von bis zu 0,5 Gew.-% beschränkt sein, insbesondere bis zu 0,3 Gew.-% beschränkt sein, um unerwünschte, große Ausscheidungen in der Stahllegierung im Wesentlichen zu vermeiden. Mindestgehalte von jeweils mindestens 0,01 Gew.-% können positiv die Steuerung der Gefügestruktur in der Stahllegierung beeinflussen.

Mindestens ein aus der Gruppe der Seltenerdmetalle zugeordnetes Element (Cer und/oder Lanthan) kann mit einem Gehalt bis zu 0,2 % Gew.-% anwesend sein, um unerwünschte, große Ausscheidungen in der Stahllegierung im Wesentlichen zu vermeiden. Um positiv Einfluss auf die Steuerung der Gefügestruktur in der Stahllegierung nehmen zu können, kann der Gehalt des mindestens einen aus der Gruppe der Seltenerdmetalle zugeordneten Elements mindestens 0,01 % Gew.-% betragen.

Mangan hat insbesondere jeweils mit einem Gehalt von mindestens 0,01 Gew.-% positiven Einfluss auf die Festigkeit in dichtereduzierten Stählen. Es führt bei hohen Gehalten zur Ausbildung von Härtungsgefügen (α'- und ε-Martensit) sowie zu TRIP-bzw. TWIP-fähigem Austenit und zu besonders guten Festigkeits-Umformbarkeits-Relationen. Oberhalb von 25,0 Gew.-% reduzieren sich diese Mechanismen der induzierten Plastizität und eine weitere kostenrelevante Zulegierung ist nutzlos. Mangan kann insbesondere bis maximal 3,0 Gew.-% zulegiert werden.

Silizium und/oder Chrom können insbesondere jeweils mit einem Gehalt von mindestens 0,01 Gew.-% positiv Einfluss, insbesondere auf die Korrosionsbeständigkeit nehmen. Silizium mit einem Gehalt oberhalb von 2,0 Gew.-% führen zur Bildung von unerwünschten, spröden intermetallischen Phasen. Chrom führt mit maximal bis zu 9,0 Gew.-% insbesondere in Kombination mit Aluminium zu guter Korrosionsbeständigkeit, wobei eine weitere kostenrelevante Zulegierung nutzlos ist. Insbesondere können die Gehalte jeweils auf maximal 1,0 Gew.-%, vorzugsweise jeweils auf maximal 0,5 Gew.-% beschränkt sein.

Zirkon, Vanadium, Wolfram, Molybdän und/oder Kobalt sind Karbidbildner und können jeweils mit einem Gehalt von bis zu 1,0 % anwesend sein. Ihr Gehalt kann jeweils auf maximal 0,5 Gew.-% beschränkt sein.

Nickel und/oder Kupfer können jeweils mit einem Gehalt von bis zu 2,0 % Gew.-% anwesend sein und können jeweils mit mindestens einem Gehalt von 0,01 Gew-% die Korrosionsbeständigkeit verbessern. Insbesondere kann der Gehalt jeweils auf maximal 0,5 Gew,-% beschränkt sein.

Bor kann die Ausbildung eines feinen Gefüges begünstigen und kann mit einem Gehalt bis zu 0,1 Gew-% anwesend sein, wobei der Gehalt auf maximal 0,01 Gew.-% beschränkt sein kann, um die Wirkung von Bor effektiv nutzen zu können.

Calcium zur Abbindung von Schwefel dienen und kann mit einem Gehalt bis zu 0,1 Gew.-% anwesend sein. Insbesondere kann der Gehalt auf maximal 0,01 Gew.-% beschränkt sein.

Gemäß einer ersten Ausführung des erfindungsgemäßen Fahrzeugrades weist die dichtereduzierte Stahllegierung eine Dichte von maximal 7,4 g/cm³, insbesondere von maximal 7, 2 g/cm³, bevorzugt von maximal 7,0 g/cm³ auf. Je geringer die Dichte, umso vorteilhafter wirkt sich dies auf eine Gewichtsreduzierung und/oder eine verbesserte Rotationsbeschleunigung des erfindungsgemäßen Fahrzeugrades aus.

Bestehen nicht beide Komponenten des Fahrzeugrades, nämlich die Felge und auch die Radschüssel aus einer dichtereduzierten Stahllegierung, so besteht die aus einer nicht dichtereduzierten Stahllegierung gebildeten Komponente, sei es die Felge oder die Radschüssel, gemäß einer weiteren Ausgestaltung des Fahrzeugrades aus einer mikrolegierten Stahllegierung, einer überwiegend einphasigen Stahllegierung, einer Mehrphasenstahllegierung oder einer vergütbaren Stahllegierung. Eine Mehrphasenstahllegierung, beispielsweise eine Dualphasenstahl-, eine Komplexphasenstahl-, eine Ferrit-Bainit-Stahl- oder eine überwiegend einphasige Stahllegierung, wie beispielsweise eine Martensitphasen-Stahllegierung, mit einer Zugfestigkeit der Mehrphasenstahllegierung von mindestens 500 MPa, vorzugsweise mindestens 600 MPa und besonders bevorzugt mindestens 700 MPa, wobei das Gefüge der Mehrphasenstahllegierung aus mindestens zwei der Phasen Ferrit, Bainit, Austenit oder Martensit besteht, oder aus einer vergütbaren (härtbaren) Stahllegierung, beispielsweise eine Warmumformstahl- oder lufthärtende Stahllegierung mit einer Zugfestigkeit von mindestens 700 MPa, vorzugsweise mindestens 800 MPa und besonders bevorzugt mindestens 900 MPa, wobei das Gefüge der vergütbaren Stahllegierung überwiegend aus Martensit, insbesondere mehr als 90% des Gefüges aus Martensit besteht, kann mit zunehmender Festigkeit bei im Wesentlichen gleichbleibender Performance die jeweilige Materialdicke der Radschüssel reduziert werden und dadurch das Gewicht weiter herabgesetzt werden. Alternativ können auch die bisher konventionell, eingesetzten Stahllegierungen verwendet werden.

Gemäß einer weiteren Ausführung des erfindungsgemäßen Fahrzeugrades ist die Radschüssel zumindest bereichsweise stoffschlüssig, kraftschlüssig und/oder formschlüssig, vorzugsweise mittels Schweiß- oder Lötnaht mit der Felge verbunden. Zumindest teilweise, insbesondere vollständig umlaufend an der Kante der Radschüssel wird die Radschüssel vorzugsweise über eine Kehlnaht, welche als MIG-, MAG-, Laser- oder Lötnaht ausgeführt sein kann, mit der Felge verbunden. Alternativ oder kumulativ sind auch andere Nahtformen oder Fügeverfahren, beispielsweise Reibrührschweißen oder Widerstandspunktschweißen denkbar. Eine kraftschlüssige Verbindung durch einen (zusätzlichen) Presssitz zwischen Radschüssel und Felge im Kontaktbereich kann zur Entlastung der punkt- oder linienförmigen, insbesondere stoffschlüssigen Verbindung beisteuern. Insbesondere kann im vollständigen Kontaktbereich zwischen der Radschüssel und der Felge zusätzlich eine Polymerschicht oder Strukturlack vorgesehen sein, welche ein Eindringen insbesondere von Spritzwasser und damit verbunden eine Korrosion zwischen der Radschüssel und der Felge im späteren Gebrauch verhindern kann. Die Polymerschicht kann aus einer silikonhaltigen Schicht bestehen, beispielsweise eine Silikonklebefolie sein, welche schmelzschweiß- als auch lötgeeignet ist. Auch mechanische Verbindungen wie beispielsweise Clinchen oder Stanzen sind alternativ denkbar. Die Verbindung zwischen Radschüssel und Felge muss nicht zwangsläufig im sogenannten Tiefbett der Felge erfolgen. Eine Übertragung auf weitere Radkonstruktionen wie beispielsweise Semi- und Full-Face-Scheibenräder oder eine mehrteilige Ausführung ist ebenfalls möglich.

Im Allgemeinen sind die Felge und/oder Radschüssel jeweils mittels Druckumformen, Zugumformen, Zugdruckumformen, Biegeumformen, Schubumformen, Drückwalzen und/oder Tiefziehen, insbesondere mittels Warmumformung mit zumindest teilweiser Presshärtung, oder mittels einer Kombination der genannten Herstellungsverfahren geformt.

Der zweite Aspekt der Erfindung betrifft die Verwendung eines erfindungsgemäßen Fahrzeugrades in Personenfahrzeugen, Nutzfahrzeugen, Lastkraftwagen, Sonderfahrzeugen, Bussen, Omnibussen, ob mit Verbrennungsmotor und/oder elektrischem Antrieb, Anhänger oder Trailer.

Im Folgenden wird die Erfindung anhand einer Ausführungsbeispiele darstellenden Zeichnung näher erläutert. Gleiche Teile sind mit gleichen Bezugszeichen versehen. Es zeigt:
- Figur 1): ein erfindungsgemäßes Fahrzeugrad in perspektivischer Darstellung und
- Figur 2): einen Teilquerschnitt durch das Fahrzeugrad in Fig. 1).

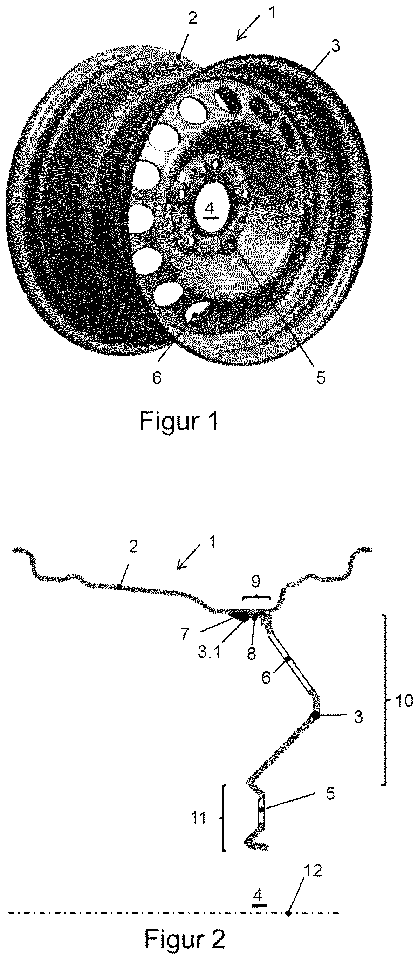

In Figur 1) ist in perspektivischer Darstellung ein Ausführungsbeispiel eines erfindungsgemäßen Fahrzeugrades (1) gezeigt, beispielsweise für einen Personenkraftwagen. In Figur 2) ist ein Teilquerschnitt durch das Fahrzeugrad 1) dargestellt, wobei aufgrund der rotationssymmetrischen Ausführung nur der obere Bereich des Fahrzeugrades (1) oberhalb der Symmetrieachse (12) abgebildet ist. Das Fahrzeugrad (1) umfasst eine insbesondere profilierte Felge (2) zur Aufnahme eines nicht dargestellten Reifens und eine an die Felge (2) angebundene Radschüssel (3). Die Radschüssel (3) ist im Wesentlichen schalenförmig ausgebildet. Die Verbindung untereinander kann stoff-, form- und/oder kraftschlüssig sein. Wie in Figur 2) im Detail zu erkennen ist, ist vorzugsweise die Radschüssel (3) zumindest teilweise, an ihrer Kante (3.1) über eine Schweiß- oder Lötnaht (7), welche als MIG-, MAG-, Lasernaht ausgeführt sein kann, an die Felge (2) angebunden. Zusätzlich kann auch eine kraftschlüssige Verbindung im Kontaktbereich (9) durch einen Presssitz vorgesehen sein, um beispielsweise die Kehlnaht (7) im Betrieb zu entlasten.

Die Radschüssel umfasst eine Mittenöffnung (7) und einen umlaufenden Stegbereich (11), in welchem mehrere um die Mittenöffnung (7) angeordneten Öffnungen (8) zur Aufnahme von nicht dargestellten Verbindungsmitteln, wie beispielsweise Bolzen und/oder Schrauben, vorgesehen sind. Zumindest ein Teil des Stegbereichs (11) bildet den Anbindungsbereich zur lösbaren Anbindung an einen nicht dargestellten Radträger. Die Radschüssel (3) weist ferner einen an den Stegbereich (11) radial abgehenden im Querschnitt beispielsweise v-förmig ausgebildeten Bereich (10) auf, in welchem Öffnungen (6) vorgesehen sind, welche beispielsweise als Belüftungslöcher fungieren und/oder durch gezieltes Ausstanzen bzw. Weglassen von Material zusätzliches Gewicht am Fahrzeugrad (1) einsparen können. Der Bereich (10) umfasst einen radial abgehenden Kragenbereich (8), welcher den Kontaktbereich (9) zur Anbindung an die Felge (2) bildet. Insbesondere kann im vollständigen Kontaktbereich (9) zwischen der Radschüssel (3) und der Felge (2) zusätzlich eine Polymerschicht oder Strukturlack vorgesehen sein. Besonders bevorzug besteht die Felge (2) aus einer dichtereduzierten Stahllegierung mit einer Dichte von maximal 7,4 g/cm³, vorzugsweise enthaltend folgende Legierungselemente in Gew.-%: C: bis zu 0,4 %, Al: 3,0-20,0 %, P: bis zu 0,1 %, S: bis zu 0,1 %, N: bis zu 0,1 %, sowie optional eines oder mehrere der Elemente Nb: bis zu 0,5 %, Ti: bis zu 0,5 %, Ce und/oder La: bis zu 0,2 %, Mn: bis zu 25,0 %, Si: bis zu 2,0 %, Si: bis zu 2,0 %, Cr: bis zu 9,0 %, Zr: bis zu 1,0 %, V: bis zu 1,0 %, W: bis zu 1,0 %, Mo: bis zu 1,0 %, Co: bis zu 1,0 %, Ni: bis zu 2,0 %, B: bis zu 0,1 %, Cu: bis zu 3,0 %, Ca: bis zu 0,1 %, enthält, Rest Fe und unvermeidbare Verunreinigungen.

Die Radschüssel (3) kann aus einer Mehrphasen-Stahllegierung, beispielsweise einer Dualphasenstahl-, einer Komplexphasenstahl-, einer Ferrit-Bainit-Stahl- oder eine Martensitphasen-Stahllegierung mit einer Zugfestigkeit von mindestens 500 MPa, vorzugsweise mindestens 600 MPa, besonders bevorzugt mindestens 700 MPa, wobei das Gefüge der Mehrphasen-Stahllegierung aus mindestens zwei der Phasen Ferrit, Bainit, Austenit oder Martensit besteht, oder aus einer vergütbaren Stahllegierung, beispielsweise einer Warmumformstahl- oder lufthärtenden Stahllegierung mit einer Zugfestigkeit von mindestens 700 MPa, vorzugsweise mindestens 800 MPa, besonders bevorzugt mindestens 900 MPa, wobei das Gefüge der vergütbaren Stahllegierung überwiegend aus Martensit, insbesondere mehr als 90% aus Martensit bestehen. Alternativ kann die Radschüssel (3) auch aus einer dichtereduzierten Stahllegierung, vorzugsweise mit einem Al-Gehalt zwischen 3,0 und 20,0 Gew.-% bestehen. Beispielsweise kann die Radschüssel (3) auch aus einer konventionell, verwendeten Stahllegierung bestehen.

Die Radschüssel (3) und die Felge (2) sind jeweils mittels Druckumformen, Zugumformen, Zugdruckumformen, Biegeumformen, Schubumformen, Drückwalzen oder Tiefziehen, insbesondere mittels Warmumformung mit optional zumindest teilweiser Presshärtung, oder mittels einer Kombination der genannten Herstellungsverfahren geformt.

Es wurde ein konventionelles Fahrzeugrad, beispielsweise ein Kraftfahrzeugrad bestehend aus einer Radschüssel mit einer einheitlichen Dicke von3,6 mm und einer Felge mit einer einheitlichen Dicke von 2,0 mm, wie in Figur 1 dargestellt, zusammengebaut. Es wurde eine Stahllegierung aus einem Dualphasenstahl für die Felge und Radschüssel verwendet, mit in Gew.-%: C bis zu 0,12 %, Al bis zu 0,08 %, Mn bis zu 1,5 %, Si bis zu 0,8 %, Cr und Mo bis zu 1,0 %, B bis zu 0,005 %, Nb und Ti bis zu 0,15 %, Ca und Co und Ni und V und Cu bis zu 1,0 % P bis zu 0,06 %, S bis zu 0,01 %, N bis zu 0,01 %, Rest Fe und unvermeidbare, erschmelzungsbedingte Verunreinigungen.

Die Dichte der Stahllegierung liegt bei ca. 7,8 g/cm³. Das Fahrzeugrad hat ein Gewicht von ca. 8,4 kg und eine Massenträgheit in Höhe von 0,260 kg/m².

Im Vergleich dazu wurde ein erfindungsgemäßes Fahrzeugrad mit gleicher Abmessung und Ausgestaltung mit einer Radschüssel bestehend aus der vorgenannten Dualphasen-Stahllegierung und einer Felge bestehend aus einer dichtereduzierenden Stahllegierung, mit in Gew.-%: C=0,01-0,1 %, Al=6,0-7,0 %, P<0,01 %, S<0,001 %, N<0,02 %, Nb=0,05-0,3 %, Ti=0,05-0,4 %, Mn<0,2 %, Si=0,01-0,1 %, Cr=0,2-0,8 %, Ni<0,2 %, B<0,0004 %, Rest Fe und unvermeidbare, erschmelzungsbedingte Verunreinigungen. Das erfindungsgemäße Fahrzeugrad weist eine bei im Wesentlichen vergleichbarer bzw. gleichbleibender Performance geringere Masse in der Felge auf, welche sich vorteilhaft auf eine Reduzierung der eingesetzten Gesamtmasse um ca. 10% sowie auf eine verbesserte Rotationsbeschleunigung infolge einer geringen Massenträgheit auswirken kann.

Die Erfindung ist nicht auf die in der Zeichnung dargestellten Ausführungsbeispiele sowie auf die Ausführungen in der allgemeinen Beschreibung beschränkt, vielmehr kann auch die Felge (2) und/oder Radschüssel (3) aus einem Tailored Product, beispielsweise einem Tailored Blank und/oder Tailored Rolled Blank gebildet sein. Je nach Fahrzeugtyp ist das Fahrzeugrad mit seiner Radschüssel und Felge mit entsprechenden Materialdicken, welche entlang des jeweiligen Querschnitts auch variieren können, belastungs- und/oder gewichtsoptimiert ausgelegt. Besonders vorteilhaft ist die Erfindung auch auf Nutzfahrzeugräder und/oder andere Fahrzeugarten, ob aktiv oder passiv angetrieben, übertragbar.

### Bezugszeichenliste

- 1: Fahrzeugrad
- 2: Felge
- 3: Radschüssel
- 4: Mittenöffnung
- 5: Bolzenöffnung
- 6: Belüftungsöffnung
- 7: Schweiß-, Löt-, Kehlnaht
- 8: Kragenbereich
- 9: Kontaktbereich
- 10: Bereich
- 11: Stegbereich
- 12: Symmetrieachse

## Patentansprüche

1. Fahrzeugrad (1) umfassend eine Felge (2) zur Aufnahme eines Reifens und eine an die Felge (2) angebundene Radschüssel (3) mit einem Anbindungsbereich zur lösbaren Anbindung an einen Radträger, **dadurch gekennzeichnet, dass** die Felge (2) und/oder die Radschüssel (3) aus einer dichtereduzierten Stahllegierung besteht und folgende Legierungsbestandteile in Gew.-% enthält:
| | |
|---|---|
| C: | bis zu 0,4 %, |
| Al: | 3,0 - 20,0 %, |
| P: | bis zu 0,1 %, |
| S: | bis zu 0,1 %, |
| N: | bis zu 0,1 %, |
sowie optional eines oder mehrere der Elemente
| | |
|---|---|
| Nb: | bis zu 0,5 %, |
| Ti: | bis zu 0,5 %, |
| Ce und/oder La: | bis zu 0,2 %, |
| Mn: | bis zu 25,0 %, |
| Si: | bis zu 2,0 %, |
| Cr: | bis zu 9,0 %, |
| Zr: | bis zu 1,0 %, |
| V: | bis zu 1,0 %, |
| W: | bis zu 1,0 %, |
| Mo: | bis zu 1,0 %, |
| Co: | bis zu 1,0 %, |
| Ni: | bis zu 2,0 %, |
| B: | bis zu 0,1 %, |
| Cu: | bis zu 3,0 %, |
| Ca: | bis zu 0,1 %, |
Rest Fe und unvermeidbare Verunreinigungen.

2. Fahrzeugrad nach Anspruch 1, **dadurch gekennzeichnet, dass** die dichtereduzierte Stahllegierung eine Dichte von maximal 7,4 g/cm³, insbesondere von maximal 7, 2 g/cm³, bevorzugt von maximal 7,0 g/cm³ aufweist.

3. Fahrzeugrad nach einem der vorgenannten Ansprüche, **dadurch gekennzeichnet, dass** die Felge (2) oder die Radschüssel (3) aus einer mikrolegierten Stahllegierung, einer überwiegend einphasigen Stahllegierung, einer Mehrphasen-Stahllegierung oder einer vergütbaren Stahllegierung besteht.

4. Fahrzeugrad nach einem der vorgenannten Ansprüche, **dadurch gekennzeichnet, dass** die Radschüssel (3) zumindest bereichsweise stoffschlüssig mittels Schweiß- oder Lötnaht (7) an der Felge (2) angebunden ist.

5. Verwendung des Fahrzeugrades nach einem der vorgenannten Ansprüche, in Personenfahrzeugen, Nutzfahrzeugen, Lastkraftwagen, Sonderfahrzeugen, Bussen, Omnibussen, ob mit Verbrennungsmotor und/oder elektrischem Antrieb, Anhänger oder Trailer.

## Claims

1. Vehicle wheel (1) comprising a rim (2) for accommodating a tire and, fastened to the rim (2), a wheel disk (3) having a fastening region for detachable fastening to a wheel carrier, **characterized in that** the rim (2) and/or the wheel disk (3) consists of a reduced-density steel alloy and contains the following alloying components in wt.%:
| | |
|---|---|
| C: | up to 0.4%, |
| Al: | 3.0-20.0%, |
| P: | up to 0.1%, |
| S: | up to 0.1%, |
| N: | up to 0.1% |
and optionally one or more of the elements
| | |
|---|---|
| Nb: | up to 0.5%, |
| Ti: | up to 0.5%, |
| Ce and/or La: | up to 0.2%, |
| Mn: | up to 25.0%, |
| Si: | up to 2.0%, |
| Cr: | up to 9.0%, |
| Zr: | up to 1.0%, |
| V: | up to 1.0%, |
| W: | up to 1.0%, |
| Mo: | up to 1.0%, |
| Co: | up to 1.0%, |
| Ni: | up to 2.0%, |
| B: | up to 0.1%, |
| Cu: | up to 3.0%, |
| Ca: | up to 0.1%, |
remainder Fe and unavoidable impurities.

2. Vehicle wheel according to Claim 1, **characterized in that** the reduced-density steel alloy comprises a density of at most 7.4 g/cm³, in particular of at most 7.2 g/cm³, preferably of at most 7.0 g/cm³.

3. Vehicle wheel according to one of the above-stated claims, **characterized in that** the rim (2) or the wheel disk (3) consists of a microalloyed steel alloy, a predominantly single-phase steel alloy, a multiphase steel alloy or a heat-treatable steel alloy.

4. Vehicle wheel according to one of the above-stated claims, **characterized in that** the wheel disk (3) is fastened at least in places by material bonding by means of a welded or brazed seam (7) to the rim (2).

5. Use of vehicle wheel according to one of the above-stated claims in automobiles, commercial vehicles, trucks, special vehicles, buses, coaches, whether with an internal combustion engine and/or electrical powertrain, trailers or the like.

## Revendications

1. Roue de véhicule (1) comprenant une jante (2) pour la réception d'un pneu et un voile de roue (3) relié à la jante (2) comportant une zone de liaison pour la liaison amovible à un support de roue, **caractérisée en ce que** la jante (2) et/ou le voile de roue (3) est constitué(e)/sont constitués d'un alliage d'acier à densité réduite et contien(nen)t les ingrédients d'alliage suivants en % en poids :
C : jusqu'à 0,4 %,
Al : 3,0 à 20,0 %,
P : jusqu'à 0,1 %,
S : jusqu'à 0,1 %,
N : jusqu'à 0,1 %,
ainsi qu'éventuellement un ou plusieurs des éléments
Nb : jusqu'à 0,5 %,
Ti : jusqu'à 0,5 %,
Ce et/ou La : jusqu'à 0,2 %,
Mn : jusqu'à 25,0 %,
Si : jusqu'à 2,0 %,
Cr : jusqu'à 9,0%,
Zr : jusqu'à 1,0 %,
V : jusqu'à 1,0 %,
W : jusqu'à 1,0 %,
Mo : jusqu'à 1,0 %,
Co : jusqu'à 1,0 %,
Ni : jusqu'à 2,0 %,
B : jusqu'à 0,1 %,
Cu : jusqu'à 3,0 %,
Ca : jusqu'à 0,1 %,
le reste étant Fe et des impuretés inévitables.

2. Roue de véhicule selon la revendication 1, **caractérisée en ce que** l'alliage d'acier à densité réduite présente une densité de maximum 7,4 g/cm³, en particulier de maximum 7,2 g/cm³, préférablement de maximum 7,0 g/cm³.

3. Roue de véhicule selon l'une quelconque des revendications précédentes, **caractérisée en ce que** la jante (2) ou le voile de roue (3) est constitué(e) d'un alliage d'acier microallié, d'un alliage d'acier majoritairement monophasique, d'un alliage d'acier polyphasique ou d'un alliage d'acier trempable.

4. Roue de véhicule selon l'une quelconque des revendications précédentes, **caractérisée en ce que** le voile de roue (3) est relié au moins par endroits matériellement par un cordon de soudure soudé ou brasé (7) à la jante (2).

5. Utilisation de la roue de véhicule selon l'une quelconque des revendications précédentes, dans des véhicules personnels, des véhicules utilitaires, des camions, des véhicules spéciaux, des bus, des omnibus, que ce soit avec un moteur à combustion et/ou un entraînement électrique, des remorques ou des caravanes.
